# DEMANDE DE BREVET EUROPEEN

(11) **EP 1 466 524 A1**
(43) Date de publication de la demande: **13.10.2004**
(21) Numéro de dépôt: 04290677.6
(22) Date de dépôt: 11.03.2004
(51) Int. Cl.: A01K 61/00

(54) **Dispositif et procédé pour l'élevage en mer de mollusques tels que des moules**

(30) Priorité: 11.03.2003 FR 0303202
(71) Demandeur: Fontenay, Dominique, 50560 Blainville Sur Mer (FR)
(72) Inventeur: Fontenay, Dominique, 50560 Blainville Sur Mer (FR)
(74) Mandataire: Saint-Marc, Christophe Andréas

(57) **Abrégé**

Un dispositif pour l'élevage en mer de mollusques tels que des moules comprend une embase submersible (2) et un ou plusieurs pieux verticaux (3) fixés de manière amovible sur ladite embase. Un procédé pour l'élevage en mer de tels mollusques consiste, après installation sur les pieux (3) du dispositif (1) de cordes ensemencées de naissain, à immerger ledit dispositif pendant environ deux mois dans une zone accessible par marée d'environ 50 à 75, à reprendre ledit dispositif et à l'immerger pendant six à huit mois dans une zone située au zéro des cartes ou en eau profonde, à reprendre ledit dispositif et à l'immerger pendant au moins quinze jours dans une zone accessible par marée d'environ 50 à 75, et à installer éventuellement ledit dispositif dans une zone accessible par marée d'environ 30 à 50.

## Description

La présente invention concerne un procédé et un dispositif pour l'élevage en mer de mollusques tels que des moules. Elle s'applique notamment au domaine de l'élevage en eau profonde de moules dites de bouchot.

La plupart des moules que l'on trouve actuellement sur le marché proviennent de parcs où elles sont élevées sur des bouchots. Les méthodes traditionnelles d'élevage de moules de bouchot présentent notamment comme inconvénients de réclamer une importante main d'oeuvre et d'être tributaires de la marée puisque celle-ci, selon l'importance de son coefficient, interdit plus ou moins longtemps l'accès aux bouchots.

Des procédés permettant de remédier à ces inconvénients ont été proposés. Ainsi, la demande de brevet français No. 82 19075 décrit un procédé utilisant des supports amovibles sur lesquels sont installées des cordes ensemencées de naissain. Ces supports sont immergés pendant environ deux mois dans une zone dite de pré-grossissement puis ils sont récupérés pour être immergés cette fois pendant au moins environ six à huit mois dans une zone dite de la mise à la pousse, puis ils sont à nouveau récupérés pour être immergés cette fois pendant au moins quinze jours à un mois dans une zone dite d'accoutumance et enfin ils sont récupérés pour être immergés dans une zone dite de réserve. Les différentes zones sont caractérisées par des profondeurs différentes. Par exemple, la zone de réserve est accessible par marée de coefficient d'environ 30 à 50, les zones de pré-grossissement et d'accoutumance sont accessibles par marée de coefficient d'environ 50 à 75 et la zone de mise à la pousse est située au zéro des cartes ou en eau profonde.

L'installation des cordes ensemencées de naissain sur des support amovibles peut être réalisée sur la terre ferme dans un endroit approprié tel qu'un atelier ou un hangar, ce qui facilite grandement les conditions de travail du personnel chargé de cette tâche. L'immersion et le relevage des supports amovibles peuvent être assurés de façon simple et rapide à partir d'un bateau équipé d'un moyen de manutention tel qu'un treuil ou une grue. L'immersion dans les différentes zones précitées est réalisable quel que soit le coefficient de la marée.

Les supports amovibles décrits dans le brevet français No. 82 19075 susmentionné comprennent une embase circulaire supportant un bâti de forme conique, tronconique ou pyramidale. Des moyens d'accrochage régulièrement espacés sur l'embase circulaire et des moyens correspondants ménagés sur la partie supérieure du bâti permettent l'installation d'éléments allongés sur lesquels les cordes sont installées, par exemple des tubes porte cordes en plastique fixés au moyen de bouchons. Afin de permettre le montage sur le support amovible des tubes porte cordes et leur démontage, un moyen de fixation amovible est prévu sous forme d'une tige coulissant dans un manchon, cette tige étant pourvue de bras reliés à des bouchons de fixation des tubes à corde.

Les supports amovibles du type décrit dans le brevet français No 82 19075 susmentionné présentent un certain nombre d'inconvénients. La structure pyramidale, conique ou tronconique de ces supports limite la hauteur des tubes porte cordes. En outre, du fait de la position inclinée des tubes porte cordes après assemblage au support amovible, une corde ensemencée de naissain devra être enroulée autour de chaque tube porte corde avant son montage sur le support amovible, ce qui en compliquera la manipulation. De plus, du fait de cette position inclinée, chaque tube porte corde d'un même support devra être démonté individuellement et manuellement pour permettre la récolte des moules qu'il est destiné à supporter, ce qui constitue une opération physiquement éprouvante, chaque tube chargé de moules pouvant peser plusieurs dizaines de kilos.

La présente invention a notamment pour objet un dispositif pour l'élevage en mer de mollusques tels que des moules permettant de résoudre les problèmes qui viennent d'être évoqués.

En effet, la présente invention concerne un dispositif conforme au paragraphe introductif, formant support amovible adapté à être immergé et relevé et étant destiné à recevoir une ou plusieurs cordes ensemencées de naissain ou un ou plusieurs pochons remplis de jeunes moules, dispositif caractérisé en ce qu'il inclut une embase submersible et un ou plusieurs pieux sensiblement verticaux aptes à être fixés de manière amovible sur ladite embase, chacun desdits pieux étant destiné à recevoir une corde ensemencée de naissain ou un pochon rempli de jeunes moules.

Chaque pieu d'un support peut être aisément manipulé indépendamment du reste du support, le montage et le démontage de ce pieu n'affectant pas les autres pieux du support. De plus, le fait que chaque pieu soit monté de manière sensiblement verticale sur l'embase permet une récolte mécanique des moules portées par ce pieu sans qu'il soit nécessaire de le démonter de l'embase. En outre, l'enroulement d'une corde ensemencée sur un tel pieu sera également rendu aisé par sa verticalité, qui facilitera l'enroulement de la corde sur le pieu alors qu'il sera déjà fixé à son embase. Il n'existe a priori pas de limitation dans la hauteur des pieux. Avantageusement, tous les pieux d'un même support auront une même hauteur, de manière à faciliter leur stockage.

La présente invention concerne également un procédé pour l'élevage en mer de mollusques tels que des moules comprenant une étape d'installation consistant à installer sur un support amovible, hors de l'eau, une ou plusieurs cordes ensemencées de naissain ou un ou plusieurs pochons remplis de jeunes moules, et une ou plusieurs étapes d'immersion consistant à immerger ledit support amovible dans une ou plusieurs zones maritimes de profondeurs différentes, caractérisé en ce que ledit support amovible est le support amovible défini précédemment.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue en élévation de face d'un dispositif pour l'élevage en mer de mollusques conforme à un mode de réalisation particulier de l'invention ;
la Fig. 2 est une vue en plan de dessus de ce dispositif ; et
la Fig. 3 est une vue partielle en coupe, à plus grande échelle, de ce dispositif, montrant un moyen de fixation amovible d'un pieu.

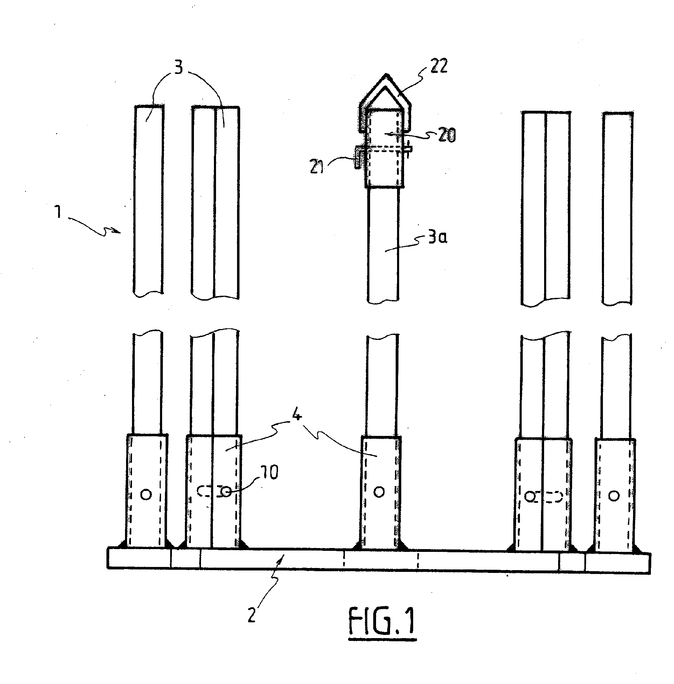

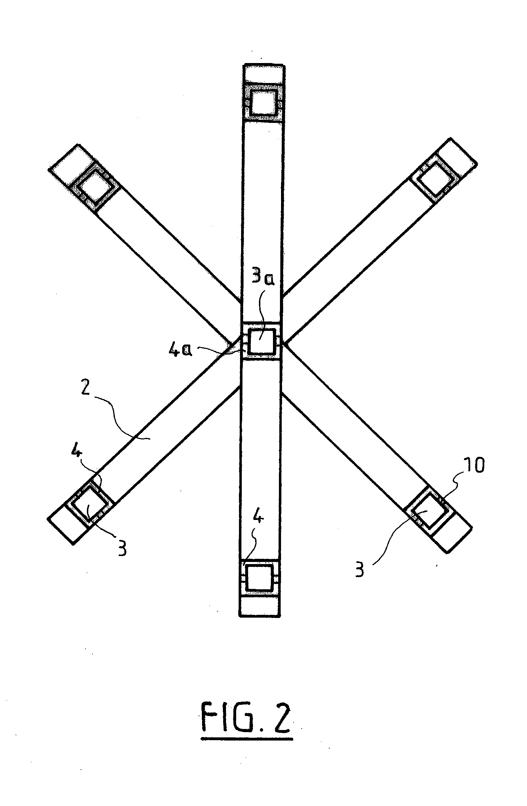

En référence aux Figs. 1 et 2, un dispositif 1 formant support amovible comprend globalement une embase 2 sur laquelle sont fixés de manière amovible par l'intermédiaire de moyens de fixation 4 des pieux verticaux 3.

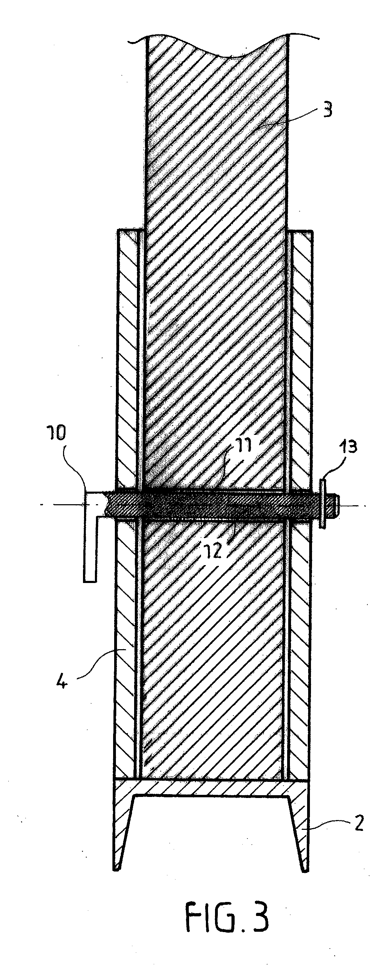

Ainsi qu'on le voit sur la Fig. 2, l'embase 2 s'étend dans un plan horizontal et a une forme d'étoile à six branches. Une telle forme sensiblement plane permettra un empilage aisé, à champ ou à plat, de nombreuses embases les unes contre les autres lorsque lesdites embases auront été débarrassées de leurs pieux, alors que la forme conique, tronconique ou pyramidale des embases du support connu rend un tel empilement volumineux par nature. Les branches de l'embase sont des profilés en U ouverts vers le bas, ainsi qu'on le voit bien sur la Fig. 3. L'embase 2 peut avoir, par exemple, une envergure d'un mètre cinquante. L'embase 2 peut être pourvue de pieds (non représentés). Ces pieds seront avantageusement installés aux extrémités des branches de l'embase. Ils pourront être au nombre de deux ou de trois, soudés verticalement ou avec une certaine inclinaison et avoir une longueur plus ou moins importante en fonction de la nature des fonds marins. Ces pieds sont destinés à améliorer l'ancrage du dispositif 1.

Ainsi qu'on le voit sur la Fig. 2, un moyen de fixation 4 est soudé à l'extrémité de chaque branche de l'embase 2. En outre, un moyen de fixation 4A est soudé au centre de l'embase 2. En référence à la Fig. 3, chaque moyen de fixation 4 est un tube d'axe vertical formant manchon adapté à recevoir un pieu 3. Dans l'exemple représenté, les manchons 4 sont de section carrée. Chaque manchon comporte deux percements 10 coaxiaux adaptés à recevoir une goupille 12, qui pourra de plus être immobilisée axialement par une goupille élastique 13 de type agricole disposée perpendiculairement à l'extrémité de la goupille 12. L'axe des percements 10 est perpendiculaire à la branche de l'embase 2 sur laquelle le manchon 4 est soudé, ce qui permet de faciliter la manipulation de la goupille 12. Dans l'exemple représenté, les manchons 4 ont une hauteur de 30 cm.

Ainsi qu'on le voit sur la Fig. 1, les pieux 3 sont, dans ce mode de réalisation particulier, des pieux de section carrée. Chaque pieu est adapté à venir s'enfiler dans un manchon 4 de manière à s'étendre verticalement à partir de l'embase 2. Chaque pieu est percé dans sa partie inférieure d'un alésage 11 adapté à recevoir la goupille 12. La goupille 12, en prise à la fois avec les percements 11 et l'alésage 10, assure une immobilisation axiale du pieu 3 dans le manchon 4. Pour démonter le pieu 3, il faut ôter la goupille 12 puis tirer verticalement vers le haut le pieu 3. Dans l'exemple représenté la section des pieux est de 8 cm sur 8 cm et la hauteur des pieux est de 2m. Des pieux plus petits ou plus grands peuvent être alternativement installés dans les manchons 4. Ces pieux seront généralement réalisés en bois exotique du Brésil qui est le bois le plus fréquemment utilisé pour la culture de la moule de bouchot.

Un pieu central 3A qui est enfilé dans le manchon 4A soudé au centre de l'embase 2 est pourvu, au niveau de sa partie supérieure, d'un moyen d'accrochage amovible 20 permettant l'accrochage du dispositif 1 à un crochet suspendu au câble d'un treuil ou d'une grue pour permettre l'immersion et le relevage du dispositif 1. Le moyen d'accrochage 20 comprend un manchon dans lequel vient s'enfiler l'extrémité supérieure du pieu 3A, une goupille 21 traversant le manchon 20, d'une part, et une partie supérieure du pieu 3A, d'autre part, assurant ainsi une immobilisation axiale du pieu 3A dans le manchon 20. Le manchon 20 est pourvu sur sa partie supérieure d'un fer 22 cintré en V à l'envers permettant l'accrochage d'un crochet. Ce fer 22 permet l'accrochage et le centrage automatique lors de l'immersion ou du relevage.

Un procédé pour l'élevage en mer des moules comprend une première étape d'installation consistant à installer sur les pieux 3 des cordes ensemencées de naissain ou des pochons remplis de jeunes moules. Des étapes d'immersion consistent à immerger le dispositif 1 dans une ou plusieurs zones maritimes de profondeurs différentes.

Par exemple, ce procédé consiste successivement à installer sur le dispositif 1, hors de l'eau, des cordes ensemencées de naissain, à immerger le dispositif 1 pendant deux mois dans une zone dite de pré-grossissement accessible par marée de coefficient d'environ 50 à 75, à reprendre le dispositif 1 et à l'immerger pendant au moins environ six à huit mois dans une zone dite de la mise à la pousse située au zéro des cartes ou en eau profonde, à reprendre le dispositif 1 et à l'immerger pendant au moins quinze jours à un mois dans une zone dite d'accoutumance accessible par marée de coefficient d'environ 50 à 75, et à installer éventuellement le dispositif 1 dans une zone dite de réserve accessible par marée de coefficient d'environ 30 à 50.

La période au cours de laquelle on peut installer les cordes ensemencées sur les pieux 3 s'étend généralement de mai à août. L'immersion des dispositifs 1 dans la zone de pré-grossissement est réalisée pratiquement immédiatement après l'installation des cordes et s'échelonne donc de mai à août. Pendant leur séjour dans cette zone, les dispositifs font plus ou moins saillie hors de l'eau en fonction de l'importance de la marée. On pourra ainsi profiter de la période où les dispositifs sont découverts au maximum pour exécuter des opérations telles que le contrôle de la régularité de l'ensemencement et de la mise en place du premier catinage, c'est à dire l'application sur chaque pieu 3 d'un premier filet de protection. L'immersion des dispositifs dans la zone de mise à la pousse s'échelonne généralement de août à octobre. Les dispositifs séjournants dans cette zone sont continuellement immergés de sorte que les moules peuvent se développer plus rapidement que sur des bouchots traditionnels, surtout en période hivernale où elles sont sur le trajet de courants plus chauds que ceux circulant en surface ou à proximité du rivage. Le transfert des supports de la zone de la mise à la pousse à la zone d'accoutumance s'échelonnera au fur et à mesure des ventes du mois d'août de l'année suivante jusqu'au mois de janvier. Les moules se trouvant dans la zone d'accoutumance deviennent plus dures et plus résistantes. En outre, comme elles sont mises périodiquement et progressivement à l'air libre sous l'effet de la marée, elles s'habituent à se fermer pour pouvoir survivre. Après un séjour d'au moins une quinzaine de jours dans cette zone, elles sont capables de survivre hors de l'eau pendant deux à trois jours, ce qui permet de les mettre dans le commerce dans les meilleures conditions de qualité et de fraîcheur.

## Revendications

1. Dispositif pour l'élevage en mer de mollusques tels que des moules, ledit dispositif (1) formant support amovible adapté à être immergé et relevé et étant destiné à recevoir une ou plusieurs cordes ensemencées de naissain ou un ou plusieurs pochons remplis de jeunes moules, dispositif **caractérisé en ce qu'**il inclut une embase submersible (2) et un ou plusieurs pieux sensiblement verticaux (3) aptes à être fixés de manière amovible sur ladite embase, chacun desdits pieux étant destiné à recevoir une corde ensemencée de naissain ou un pochon rempli de jeunes moules.

2. Dispositif selon la revendication 1, **caractérisé en ce que** ladite embase (2) s'étend dans un plan horizontal et a une forme d'étoile présentant une pluralité de branches portant chacune à une extrémité un desdits pieux (3).

3. Dispositif selon la revendication 2, **caractérisé en ce qu'**in inclut en outre un pieu central (3A) porté par une partie centrale de ladite embase (2).

4. Dispositif selon l'une quelconque des revendications précédentes, **caractérisé en ce que** lesdits pieux (3) ont sensiblement une même hauteur.

5. Dispositif selon la revendication 4, **caractérisé en ce qu'**il inclut en outre des moyens aptes à recevoir des extrémités supérieures de pieux (3), lesquels moyens sont aménagés sous ladite embase (2) afin que ledit dispositif (1) puisse reposer sur un dispositif identique.

6. Dispositif selon l'une quelconque des revendications précédentes, **caractérisé en ce que** ladite embase (2) est pourvue de pieds destinés à améliorer l'ancrage dudit dispositif (1).

7. Dispositif selon l'une quelconque des revendications précédentes, **caractérisé en ce que** qu'un moyen (4) de fixation amovible d'un pieu (3) sur ladite embase (2) est un manchon d'axe vertical adapté à recevoir une extrémité inférieure dudit pieu (3).

8. Dispositif selon la revendication 7, **caractérisé en ce que** ledit moyen (4) de fixation comprend un moyen de verrouillage par goupille (10, 11, 12, 13).

9. Dispositif selon l'une quelconque des revendications précédentes, **caractérisé en ce qu'**il inclut un moyen d'accrochage (20) permettant un accrochage dudit dispositif (1) à un crochet d'un moyen de levage, lesquels moyens d'accrochage sont aménagés à l'extrémité d'un pieu central (3A) dudit dispositif.

10. Procédé pour l'élevage en mer de mollusques tels que des moules comprenant une étape d'installation consistant à installer sur un dispositif formant support amovible, hors de l'eau, une ou plusieurs cordes ensemencées de naissain ou un ou plusieurs pochons remplis de jeunes moules, et une ou plusieurs étapes d'immersion consistant à immerger ledit support amovible dans une ou plusieurs zones maritimes de profondeurs différentes, **caractérisé en ce que** ledit dispositif formant support amovible est un dispositif selon l'une quelconque des revendications précédentes.

11. Procédé selon la revendication 10, **caractérisé en ce qu'**il consiste successivement à installer sur ledit dispositif (1), hors de l'eau, des cordes ensemencées de naissain, à immerger ledit dispositif pendant environ deux mois dans une zone dite de pré-grossissement accessible par marée de coefficient d'environ 50 à 75, à reprendre ledit dispositif et à l'immerger pendant au moins environ six à huit mois dans une zone dite de la mise à la pousse située au zéro des cartes ou en eau profonde, à reprendre ledit dispositif et à l'immerger pendant au moins quinze jours à un mois dans une zone dite d'accoutumance accessible par marée de coefficient d'environ 50 à 75, et à installer éventuellement ledit dispositif dans une zone dite de réserve accessible par marée de coefficient d'environ 30 à 50.
